# FASCICULE DE BREVET EUROPEEN

(11) **EP 0 910 556 B1**
(45) Date de publication et mention de la délivrance du brevet: **26.07.2000**
(21) Numéro de dépôt: 97925123.8
(22) Date de dépôt: 23.05.1997
(51) Int. Cl.: C04B 28/34

(54) **NOUVELLE COMPOSITION DE CIMENT PHOSPHOMAGNESIEN COMPRENANT UN POLYMERE SOUS FORME DE PARTICULES**
TEILCHENFÖRMIGEN POLYMER ENTHALTENDE PHOSPHOMAGNESIUMZEMENTZUSAMMENSETZUNG
NEW PHOSPHOMAGNESIUM CEMENT COMPOUND COMPRISING A POLYMER IN PARTICLE FORM

(30) Priorité: 24.05.1996 FR 9606461
(43) Date de publication de la demande: 28.04.1999
(73) Titulaire: RHODIA CHIMIE, 92408 Courbevoie Cédex (FR)
(72) Inventeur: LEMOS, Dominique, F-93500 Pantin (FR); ORANGE, Gilles, F-95230 Soisy Sous Montmorency (FR); COLOMBET, Jean-François, F-92500 Rueil Malmaison (FR)
(74) Mandataire: Dubruc, Philippe
(86) Numéro de dépôt international: FR9700904
(87) Numéro de publication internationale: WO9745380

(56) Documents cités:
- EP-A- 0 661 242
- CHEMICAL ABSTRACTS, vol. 108, no. 8, 22 Février 1988 Columbus, Ohio, US; abstract no. 61454w, XP000157811 & SU 1 350 150 A (CENTRAL SCIENTIFIC RESEARCH INSTITUTE OF BUILDING CONSTRUCTION)
- CHEMICAL ABSTRACTS, vol. 121, no. 10, 5 Septembre 1994 Columbus, Ohio, US; abstract no. 116087, OKAMOTO, MISAO ET AL: "Porous materials having high strength and excellent heat insulating property and their manufacture" XP002025228 & JP 06 024 869 A (SEKISUI HOUSE KK, JAPAN;SANYO CHEMICAL IND LTD)
- CHEMICAL ABSTRACTS, vol. 112, no. 6, 5 Février 1990 Columbus, Ohio, US; abstract no. 41546g, XP000154640 & JP 01 179 747 A (SHIKOKU KAKEN KOGYO K.K.)
- CHEMICAL ABSTRACTS, vol. 93, no. 18, 3 Novembre 1980 Columbus, Ohio, US; abstract no. 172649e, XP000185424 & SU 730 642 A (V.N.ANIPCHENKO ET AL.)

## Description

La présente invention concerne une nouvelle composition de ciment phosphomagnésien.

Les ciments phosphomagnésiens sont des liants hydrauliques, c'est-à-dire à des liants, qui en présence d'eau, se solidifient. Ils sont caractérisés par une phase liante à base d'au moins un composé du phosphore et d'au moins un composé du magnésium.

Les ciments phosphomagnésiens sont particulièrement intéressants pour leur rapidité de prise, leurs propriétés mécaniques élevées. En outre, ils peuvent être utilisés au contact de milieux acides.

Cependant, ces ciments manquent de souplesse : leur module élastique est souvent élevé. Ceci est un inconvénient lorsque, par exemple, le ciment est utilisé pour recouvrir un support qui, soumis à diverses contraintes, bouge, subit des déformations. Si le revêtement à base de ciment phosphomagnésien manque de souplesse, il se craquèle, se fissure.

Il a également été observé que, dans des conditions d'humidité élevée, ces ciments peuvent présenter une faible durabilité, notamment une mauvaise tenue aux cycles sec/humide ou gel/dégel.

La présente invention a donc pour objectif de proposer un ciment phosphomagnésien présentant un module élastique faible, tout en conservant ses propriétés avantageuses, telles que des propriétés mécaniques élevées ou l'utilisation en milieux acides.

Elle a également pour but de proposer un ciment phosphomagnésien hydrofugé, donc peu sensible aux conditions humides.

Dans ce but, l'invention concerne un ciment phosphomagnésien susceptible d'être obtenu par mise en contact d'une phase liante à base d'au moins un composé du phosphore et d'au moins un composé du magnésium, avec au moins un polymère sous forme de particules insoluble dans l'eau, et de l'eau.

L'invention concerne aussi le procédé de préparation de ce ciment phosphomagnésien qui consiste à mettre en contact les composés du phosphore et du magnésium, au moins un polymère sous forme de particules insoluble dans l'eau, et de l'eau.

D'autres avantages de l'invention apparaîtront plus clairement à la lecture de la description et des exemples.

L'invention concerne tout d'abord un ciment phosphomagnésien susceptible d'être obtenu par mise en contact d'une phase liante à base d'au moins un composé du phosphore et d'au moins un composé du magnésium, avec au moins un polymère sous forme de particules insoluble dans l'eau, et de l'eau.

Classiquement, les ciments sont constitués d'une phase liante comprenant le cas échéant, les additifs usuels dans le domaine. Bien qu'un terme différent soit utilisé pour définir des ciments comprenant des granulats, outre ladite phase liante et les éventuels additifs, pour plus de commodité, dans la description, le terme unique de "ciment" sera utilisé pour nommer ces deux types de compositions.

Le ciment selon l'invention est un ciment phosphomagnésien. La phase liante d'un tel ciment comprend donc un premier constituant à base de phosphore et un second constituant à base de magnésium.

Pour ce qui est du premier constituant à base de phosphore, tous les composés du phosphore sont utilisables dans la mesure où ils comprennent du pentoxyde de phosphore, disponible directement ou sous la forme d'un précurseur.

Ainsi, à titre de composé à base de phosphore, on peut mentionner sans intention de se limiter, le pentoxyde de phosphore, l'acide phosphorique ou des dérivés comme l'acide orthophosphorique, l'acide pyrophosphorique, l'acide polyphosphorique, ou encore les sels de tels acides, comme les phosphates, les hydrogénophosphates, les orthophosphates, les pyrophosphates, les polyphosphates, les tripolyphosphates, les tétrapolyphosphates, d'aluminium, de calcium, de potassium, de magnésium, d'ammonium, ou leurs mélanges.

Il est à noter que les rejets contenant du phosphore des industries fabriquant des fertilisants, ou encore des aciéries (décapage de l'acier, traitement pour réduire la corrosion) peuvent être employés comme constituants à base de phosphore.

Selon un mode de réalisation particulier de l'invention, on utilise les sels des acides à base de phosphore mentionnés auparavant.

De préférence, on met en oeuvre des phosphates, des hydrogénophosphates de potassium, de magnésium, d'ammonium, ou leurs mélanges. D'une façon encore plus préférée, le constituant à base de phosphore est le dihydrogénophosphate d'ammonium, éventuellement mélangé à du tripolyphosphate d'ammonium.

Le constituant à base de phosphore peut se présenter sous une forme liquide ou de préférence solide.

Selon une première variante, le constituant à base de phosphore se trouve sous la forme de particules dont la granulométrie est plus particulièrement d'au plus 300 µm. Il est à noter que cette valeur n'est pas critique et que, s'il est possible d'utiliser des constituants dont la taille des particules est supérieure à 300 µm, un broyage avant incorporation dans la composition selon l'invention peut être souhaitable. Ce broyage peut améliorer la cinétique de dissolution du constituant à base de phosphore.

Selon une seconde variante, le constituant est utilisé sous une forme adsorbée sur un support poreux. A titre de support, on peut mentionner par exemple les terres de diatomées, l'argile, la bentonite, la silice, l'alumine. L'adsorption est effectuée de manière connue en soi. Ainsi, d'une façon classique le constituant à base de phosphore, en solution ou en suspension, est mis en contact avec le support, sous agitation, puis la suspension résultante est chauffée de façon à faire évaporer le liquide en excès. Cette opération peut de même être réalisée par imprégnation du support dans un tambour ou sur disque tournant.

Le second élément de la phase liante est au moins un constituant à base de magnésium.

Tout composé à base de magnésium convient à la présente invention dans la mesure où il réagit avec le premier constituant, en présence d'eau.

A titre d'exemple, on peut citer comme convenant à la mise en oeuvre de l'invention, les constituants suivants : l'oxyde de magnésium, l'hydroxyde de magnésium, le carbonate de magnésium.

De préférence, on utilise un constituant à base d'oxyde de magnésium. Convient notamment la magnésie dite "dead burned" habituellement obtenue après calcination de carbonate de magnésium, à des températures supérieures à 1200 °C.

D'une façon avantageuse, ledit oxyde de magnésium peut être mis en oeuvre sous une forme pure ou peut éventuellement comprendre au moins un élément du type calcium, silicium, aluminium ou encore fer ; ces éléments se trouvant en général sous forme d'oxyde ou d'hydroxyde. A titre d'exemple de ce type de composé, on peut citer la dolomie, mélange comprenant notamment de l'oxyde de magnésium et de l'oxyde de calcium.

Si l'oxyde de magnésium est utilisé sous forme pure, la pureté dudit oxyde, est d'au moins 80 %.

On utilise de préférence un constituant à base de magnésium dont la surface spécifique est inférieure à 10 m²/g. Plus particulièrement, la surface spécifique est inférieure à 2 m²/g.

Par ailleurs, la granulométrie dudit constituant est habituellement comprise entre 10 et 500 µm. Il serait envisageable d'utiliser des composés dont la granulométrie se trouve en dehors de la gamme précitée, mais sans que cela n'apporte d'avantages particuliers. Ainsi, si la granulométrie est supérieure à 500 µm, une étape de broyage préalable à l'incorporation dans la composition peut être nécessaire. Par ailleurs, si la granulométrie desdits constituants était inférieure à 10 µm, on pourrait constater une modification des propriétés de la composition mise en contact avec l'eau. On peut notamment constater un accroissement de la vitesse de prise du ciment, sauf à augmenter la teneur en agent retardant la prise, dont il sera question dans la suite de la description. De ce fait, le ciment obtenu selon le procédé de l'invention pourrait être moins intéressant sur le plan de la mise en oeuvre ou sur le plan économique.

Il est à noter que les deux constituants décrits auparavant, s'ils se présentent sous forme solide, peuvent éventuellement faire l'objet d'une étape de broyage avant leur utilisation dans le procédé selon l'invention.

La proportion du constituant à base de magnésium (exprimée en poids de MgO) rapportée à celle du constituant à base de phosphore (exprimée en poids de P₂O₅) est plus particulièrement comprise entre 1 et 3.

La caractéristique essentielle du ciment selon l'invention est qu'il est susceptible d'être obtenu par mise en contact de la phase liante précédemment décrite avec au moins un additif choisi parmi les polymères sous forme de particules insoluble dans l'eau, et de l'eau.

Tous types de polymères sous forme de particules insoluble dans l'eau peuvent être utilisés et notamment ceux issus de la polymérisation de monomères à insaturations éthyléniques.

Les monomères peuvent être choisis parmi :
- le styrène, le butadiène, les esters acryliques et les nitriles vinyliques.
- les esters acryliques, c'est-à-dire les esters de l'acide acrylique et de l'acide méthacrylique avec les alcanols en C₁-C₁₂, de préférence C₁-C₈, tels que l'acrylate de méthyle, l'acrylate d'éthyle, l'acrylate de propyle, l'acrylate de n-butyle, l'acrylate d'isobutyle, l'acrylate de 2-éthylhexyle, le méthacrylate de méthyle, le méthacrylate d'éthyle, le méthacrylate de n-butyle, le méthacrylate d'isobutyle,
- les nitriles vinyliques ayant de 3 à 12 atomes de carbone, en particulier l'acrylonitrile et le méthacrylonitrile,
- l'alpha-méthylstyrène ou le vinyltoluène,
- les esters vinyliques d'acide carboxylique comme l'acétate de vinyle, le versatate de vinyle, le propionate de vinyle,
- les acides mono-et di-carboxyliques insaturés éthyléniques comme l'acide acrylique, l'acide méthacrylique, l'acide itaconique, l'acide maléique, l'acide fumarique et les mono-alkylesters des acides dicarboxyliques du type cité avec les alcanols ayant de préférence 1 à 4 atomes de carbone et leur dérivés N-substitués,
- les amides des acides carboxyliques insaturés comme l'acrylamide, le méthacrylamide, le N-méthalolacrylamide ou -méthacrylamide,
- les monomères éthyléniques comportant un groupe acide sulfonique et ses sels alcalins ou d'ammonium par exemple l'acide vinylsulfonique, l'acide vinylbenzène sulfonique, l'acide alpha-acrylamido méthylpropane-sulfonique, le 2-sulfoéthylèneméthacrylate,
- les monomères éthylèniquement insaturés comportant un groupe amino secondaire, tertiaire ou quaternaire ou un groupe hétérocyclique contenant de l'azote par exemple les vinylpyridines, le vinylimidazole, les (meth)acrylates d'aminoalkyle et les (meth)acrylamides d'aminoalkyle comme le diméthylaminoéthylacrylate ou méthacrylate, le ditertiobutylamino-éthylacrylate ou -méthacrylate, le diméthylamino méthylacrylamide ou -méthacrylamide ... de même que les monomères zwitterioniques comme l'acrylate de sulfopropyl (diméthyl) aminopropyle ...
- les esters des acides (meth) acryliques avec des alcanediols contenant de préférence 2-8 atomes de carbone tels que le mono (meth) acrylate de glycol, le mono(meth)acrylate d'hydroxypropyle, le mono(meth) acrylate de 1-4 butanediol ainsi que les monomères comportant deux doubles liasons polymérisables comme le diméthacrylate d'éthylène-glycol,
- le (meth) acrylate de glycidyle,
- les silanes vinyliques et acryliques.

Selon un premier mode préféré, le polymère mis en oeuvre dans le ciment selon l'invention est issu de la polymérisation d'au moins un monomère à insaturation éthylénique et au moins un monomère choisi parmi les monomères à fonction carboxylique et l'acrylamide ou le méthacrylamide.

Dans ce cas, le monomère à insaturation éthylénique peut être choisi parmi : le styrène, le butadiène, les esters acryliques ou méthacryliques d'alkyle en C₁-C₁₂ et leurs acides correspondants ou les esters vinyliques. Il peut s'agir, de manière avantageuse, d'un polymère insoluble dans l'eau préparé à partir d'un mélange styrène/butadiène en ce qui concerne les monomères à insaturation éthylénique.

Quant au monomère à fonction carboxylique, il peut être choisi parmi les acides carboxyliques à insaturation éthylénique. Il peut par exemple être choisi parmi l'acide acrylique, l'acide itaconique, l'acide fumarique, l'acide crotonique, l'acide maléique, l'anhydride maléique, l'acide mésaconique, l'acide glutaconique ou leurs mélanges.

Selon ce premier mode, on préfère tout particulièrement les polymère préparés à partir d'un mélange de monomères comportant 99,9 à 92 % en poids d'au moins un monomère à insaturation éthylénique et 0,1 à 8 % en poids, de préférence 2 à 5 %, d'au moins un monomère à fonction carboxylique.

Selon un autre mode préféré, le polymère est issu de la polymérisation d'au moins un monomère choisi parmi les esters vinyliques d'acide carboxylique comme l'acétate de vinyle, le versatate de vinyle, le propionate de vinyle. Il peut notamment s'agir d'un copolymère versatate de vinyle/acétate de vinyle.

Le polymère sous forme de particules insoluble dans l'eau, utilisé comme additif dans la composition du ciment selon l'invention, peut être obtenu par polymérisation en émulsion des monomères. Une telle polymérisation est habituellement mise en oeuvre en présence d'un émulsifiant et d'un initiateur de polymérisation.

Les monomères peuvent être introduits en mélange ou séparément et simultanément dans le milieu réactionnel, soit avant le début de la polymérisation en une seule fois, soit au cours de la polymérisation par fractions successives ou en continu.

En tant qu'agent émulsifiant, on met en oeuvre généralement les agents anioniques classiques représentés notamment par les sels d'acides gras, les alkylsulfates, les alkylsulfonates, les alkylarylsulfates, les alkylarylsulfonates, les arylsulfates, les arylsulfonates, les sulfosuccinates, les alkylphosphates de métaux alcalins. Ils sont employés à raison de 0,01 à 5 % en poids par rapport au poids total des monomères.

L'initiateur de polymérisation en émulsion, qui est hydrosoluble, est représenté plus particulièrement par les hydroperoxydes tels que l'eau oxygénée, l'hydroperoxyde de tertiobutyle et par les persulfates tels que le persulfate de sodium, le persulfate de potassium, le persulfate d'ammonium. Il est employé en quantités comprises entre 0,05 et 2 % en poids par rapport au total des monomères. Ces initiateurs sont éventuellement associés à un réducteur, tel que le bisulfite ou le formaldéhydesulfoxylate de sodium, les polyéthylène amines, les sucres : dextrose, saccharose, les sels métalliques. Les quantités de réducteur utilisés varient de 0 à 3 % en poids par rapport au poids total des monomères.

La température de réaction, fonction de l'initiateur mis en oeuvre, est généralement comprise entre 0 et 100 °C, et de préférence, entre 50 et 80 °C.

On peut utiliser un agent de transfert dans des proportions allant de 0 à 3 % en poids par rapport au(x) monomère(s), généralement choisi parmi les mercaptans tels que le n-dodécylmercaptan, le tertiododécylmercaptan, le tertiobutylmercaptan ou leurs esters comme le méthylmercaptopropionate ; le cyclohexène ; les hydrocarbures halogénés tels que le chloroforme, le bromoforme, le tétrachlorure de carbone.

Le polymère peut être introduit dans le mélange sous diverses formes.

Selon une première variante, le polymère se présente sous forme d'une dispersion dans l'eau de particules du polymère. Il s'agit de ce qu'on appelle couramment un latex. De tels latex sont obtenus par le procédé tel que défini ci-dessus. La valeur de leur extrait sec n'est pas critique. Il est en général de l'ordre de 50 % en poids.

La taille des particules de latex issu de la polymérisation de monomères à insaturation éthylénique et de monomères à fonction carboxylique peut être comprise entre 0,05 et 5 µm, de préférence entre 0,12 et 0,18 µm, encore plus préférentiellement entre 0,10 et 0,20 µm. Celle des particules de latex issu de la polymérisation de monomères d'esters vinyliques d'acides carboxyliques est en général comprise entre 1 et 2 µm.

Selon une deuxième variante, le polymère se présente sous forme d'une poudre redispersable dans l'eau.

Une telle poudre peut être obtenue par toute méthode connue de l'homme du métier, notamment par élimination de l'eau d'un latex.

L'eau d'un latex peut être éliminée, par exemple, par congélation, puis sublimation ou lyophilisation

On peut également l'éliminer par séchage, en particulier par séchage par atomisation (pulvérisation - séchage), en présence d'additifs anti-mottants ou d'additifs de dispersion qui assureront la redispersion de la poudre dans l'eau.

A titre d'additifs anti-mottants, on peut utiliser une charge minérale présentant une granulométrie inférieure à 20 µm environ. Il peut s'agir, par exemple, de la silice, du carbonate de calcium, du kaolin, du sulfate de baryum, de l'oxyde de titane, du talc, de l'alumine hydratée, de la bentonite et du sullfoaluminate de calcium (blanc satin).

A titre d'additifs de dispersion, divers produits peuvent être utilisés selon la nature du latex à sécher.

Lorque le latex est issu de la polymérisation de monomères à insaturation éthylénique et de monomères à fonction carboxylique, l'additif de dispersion peut être un acide aminé ou un sel d'acide aminé. Dans ce cas, l'acide aminé est, de préférence, choisi parmi :
- les acides monoaminés monocarboxylés,
- ou les acides monoaminés dicarboxylés,
- ou les acides diaminés monocarboxylés.

Les acides monoaminés monocarboxylés peuvent être notamment choisis parmi la glycine, l'alanine, la leucine, la phénylalanine, les acides monoaminés dicarboxylés peuvent être choisis parmi l'acide aspartique, l'acide glutamique, l'acide hydroxyglutamique, et les acides diaminés monocarboxylés peuvent être choisis parmi l'arginine, la lysine, l'histidine, la cystine.

Les acides aminés présents dans la poudre de polymère présentent de manière avantageuse une bonne solubilité dans l'eau, par conséquent ils peuvent se présenter sous la forme de sels et notamment de sels hydrosolubles ou hydroalcalisolubles. Il peut s'agir par exemple de sels de sodium, de potassium, d'ammonium ou de calcium.

Lorque le latex est issu de la polymérisation de monomères d'esters vinyliques d'acides carboxyliques, l'additif de dispersion est généralement un alcool polyvinylique.

En général, le polymère est introduit dans le mélange de ciment en telle quantité que sa teneur est de 0,5 à 30 parties en poids pour 100 parties en poids de phase liante. L'effet hydrofugeant du ciment phosphomagnésien apparaît même si le polymère est présent en faible quantité dans le ciment : 0,5 à 5 parties en poids de polymère pour 100 parties en poids de phase liante suffisent. Pour améliorer le module élastique du ciment phosphomagnésien, les meilleurs résultats sont obtenus lorsque la teneur en polymère est comprise entre 10 et 20 parties en poids pour 100 parties en poids de phase liante.

Selon un mode préféré de l'invention, le ciment est susceptible d'être obtenu par mise en contact de la phase liante précédemment décrite avec au moins un polymère insoluble dans l'eau et en outre au moins un second additif choisi parmi les aminoalkylsilanes, et de l'eau.

On peut observer, en effet, lors de l'introduction du polymère dans la composition du ciment selon l'invention, un entraînement d'air qui peut conduire à un matériau final poreux et à de mauvaises propriétés mécaniques. L'introduction d'un aminoalkylsilane permet d'éviter ce phénomène.

De préférence, l'aminosilane est un aminoalkyl(éthoxysilane).

Il peut particulièrement s'agir des aminoalkyl(trialkoxysilanes) de formule : R¹R²N - (CH₂)ₙ - Si(OCₘH₂ₘ₊₁)₃ avec :
n > 1, de préférence n > 3
m > 1
R¹, R² groupements alkyle, aryle, alkylaryle, alkylène, aminoalkyl.

Il peut s'agir par exemple : le gamma-aminopropyltriéthoxysilane, le 4-aminobutyltriéthoxysilane, le (aminoéthylaminométhyl)phénéthyltriméthoxysilane, le N-(2-aminoéthyl-3-amino propyl)triméthoxysilane, le ω-aminoundécyltriméthoxysilane.

L'aminoalkyl(alkoxysilane) préféré est le gamma-aminopropyltriéthoxysilane.

En général, l'aminoalkylsilane est introduit dans le mélange de ciment en telle quantité que la teneur en aminoalkylsilane est de 0,05 à 2 partie en poids pour 100 parties en poids de phase liante, de préférence de 0,1 à 1.

L'aminoalkylsilane peut être introduit directement dans la composition sous sa forme pure. Il peut également être préalablement déposé ou absorbé sur des éléments constitutifs du ciment, tels que par exemple les composés du magnésium, et être introduit via ces éléments dans la composition selon l'invention.

On peut également utilisé, avec ou à la place de l'aminoalkylsilane, un démoussant tel que par exemple le Dehydran 1922® commercialisé par la société Henkel, à raison de 0,5 à 1 partie en poids pour 100 parties en poids de phase liante.

La phase liante du ciment selon l'invention peut comprendre en outre tout type d'additif classiquement utilisé, notamment un agent retardant la prise.

Plus particulièrement, cet agent est choisi parmi des composés susceptibles de complexer le magnésium.

Ces derniers peuvent être notamment des acides carboxyliques, tels que les acides citrique, oxalique, tartrique, des acides, esters ou sels contenant du bore, des acides, esters ou sels contenant du phosphore, comme le tripolyphosphate de sodium, le sulfate ferreux, le sulfate et lignosulfonate de sodium, le chlorure de zinc, l'acétate de cuivre, le gluconate de sodium, le sulfate acétate de sodium cellulose, le produit de la réaction du formaldéhyde avec l'aminolignosulfate, le dialdéhyde amidon, la N,N-diméthyloldihydroxyéthylène urée, les silicofluorures, le tall oil et le sucrose, ces composés étant pris seuls ou en mélange.

De préférence, on utilise, seuls ou en mélange, les acides carboxyliques, et de préférence, les acides, esters ou sels contenant du bore.

Ainsi, dans cette dernière catégorie de composés, on peut mentionner, sans intention de se limiter, l'acide borique et ses sels, tels que les sels de métaux alcalins, comme le sodium (borax), les sels d'amine ou d'ammonium. Les esters de l'acide borique conviennent aussi à la mise en oeuvre de l'invention, comme les trialkyloxyborates, les triaryloxyborates.

Selon un mode particulier, l'additif est mis en oeuvre sous la forme d'une poudre dont le diamètre moyen est de 10 à 200 µm.

La quantité d'agent retardant la prise varie entre 0 et 10 parties en poids par rapport à 100 parties en poids de phase liante. De préférence, cette quantité est comprise entre 0 et 5 parties en poids rapporté à la même référence.

Les ciments obtenus par la mélange selon l'invention peuvent en outre comprendre des granulats, en tant qu'éléments constitutifs.

A titre d'exemples de tels composés, on peut mentionner le sable, la silice, l'alumine, l'oxyde de zirconium, la dolomie brute, le minerai de chrome, le calcaire, le clinker, la vermiculite, la perlite, la kaolinite. On peut de même utiliser les cendres volantes, la fumée de silice condensée.

Les cendres volantes pouvant être utilisées sont en général des cendres silicoalumineuses issues de la combustion dans les centrales thermiques notamment.

La granulométrie de ces cendres est habituellement comprise entre 0,5 et 200 µm.

La fumée de silice condensée, éventuellement constituant de la composition selon l'invention, présente en général une surface spécifique comprise entre 20 et 30 m²/g.

Selon l'application ultérieure du ciment, les granulats entrant dans la composition seront choisis soit parmi le sable, la silice ou les autres composés cités, soit parmi les cendres volantes ou la fumée de silice condensée, soit parmi un mélange de ces deux types de granulats.

Habituellement, la quantité de granulats dans le ciment selon l'invention est d'au plus 1000 parties en poids pour 100 parties en poids de phase liante.

Selon un mode de réalisation particulier, la quantité de sable, silice ou des autres composés cités dans cette liste, est généralement comprise entre 0 et 900 parties en poids rapporté à la même référence que précédemment. De plus, la quantité de fumée de silice condensée ou de cendres volantes est comprise entre 0 et 100 parties en poids.

Le ciment selon l'invention peut comprendre par ailleurs, à titre d'additifs, un agent hydrofugeant.

Enfin, le ciment selon l'invention peut comprendre tous les additifs classiques, comme les fluidifiants, avec notamment le lignosulfonate de sodium et les condensés de naphtalène sulfonate, le naphtalène, le tripolyphosphate, l'hexamétaphosphate de sodium, l'hydrogénophosphate d'ammonium, la mélanine, les alkyles siliconates.

Des agents antimousse peuvent de même être des éléments constitutifs du ciment selon l'invention. A titre d'exemple, on peut citer notamment les antimousses à base de polydiméthyl-siloxanes.

Parmi ce type d'agents, on peut citer notamment les silicones sous la forme d'une solution, d'un solide, et de préférence sous la forme d'une résine, d'une huile ou d'une émulsion, de préférence, dans l'eau. Conviennent tout particulièrement les silicones comprenant essentiellement des motifs M (RSiO_{0,5} ) et D (R₂SiO). Dans ces formules, les radicaux R, identiques ou différents, sont plus particulièrement choisis parmi l'hydrogène et les radicaux alkyles comprenant 1 à 8 atomes de carbone, le radical méthyle étant préféré. Le nombre de motifs est de préférence compris entre 30 et 120.

La quantité de silicone utilisé dans le ciment selon l'invention est inférieure ou égale à 10 parties en poids pour 100 parties en poids de phase liante, et de préférence inférieure ou égale à 5 parties en poids.

D'une façon générale, de tels additifs ne représentent pas plus de 10 parties en poids pour 100 parties en poids de phase liante. De préférence, la quantité d'additifs est comprise entre 0 et 5 parties en poids.

Le ciment selon l'invention peut comprendre en outre à titre d'additif un composé minéral introduit sous forme :
- soit de particules (1) de taille inférieure à 0,1 µm,
- soit d'agrégats (2) de taille inférieure à 0,1 µm,
- soit d'agglomérats (3) susceptibles de se désagglomérer au moins en partie, lors du mélange de ladite phase liante et de l'eau, en particules de taille inférieure à 0,1 µm ou en agrégats de taille inférieure à 0,1 µm.

Selon une première variante, le composé minéral est introduit dans le ciment sous forme de particules (1) de taille inférieure à 0,1 µm. On entend par particules (1) des objets indivisibles, se présentant sous une forme unitaire, unifiée.

Selon une deuxième variante, le composé minéral est introduit dans le ciment sous forme d'agrégats (2). On entend par agrégats (2), des objets formés de l'empilement de plusieurs objets plus petits, qui sont eux sous une forme unitaire, unifiée, tels que les particules définies précédemment. Les agrégats introduits présentent une taille inférieure à 0,1 µm. Ces agrégats sont en général très difficilement divisibles, et en particulier indivisibles dans un mélange des composés du magnésium et du phosphore et d'eau.

Selon une troisième mode variante, le composé minéral est introduit sous forme d'agglomérats (3). On entend par agglomérats (3), des objets formés de l'empilement de plusieurs objets plus petits : des particules et/ou des agrégats. Selon l'invention, les agglomérats introduits doivent pouvoir au moins en partie se désagglomérer par mélange avec les composés du magnésium et du phosphore et l'eau en les objets qui les constituent (particules ou agrégats), afin de conduire dans le mélange à des objets de taille inférieure à 0,1 µm.

Le composé minéral peut être introduit comme un mélange de ces trois formes (particules, agrégats, agglomérats).

Dans le texte, on entend par taille, la taille moyenne des particules, agrégats ou agglomérats. Cette taille est mesurée par microscopie électronique par transmission (MET).

De préférence, le composé minéral est introduit sous forme d'agglomérats présentant une taille d'au plus 60 µm, avantageusement d'au plus 20 µm. Une telle taille des agglomérats permet une manipulation plus aisée du composé minéral.

Le composé minéral peut être choisi parmi SiO₂, TiO₂, Al₂O₃, ZrO₂, Cr₂O₃, CaCO₃, le talc, le mica, le kaolin, la wollastonite, la bentonite, le métakaolin. Ce peut être des composés cristallisé ou amorphe obtenus par exemple par broyage.

Il s'agit notamment de la silice et en particulier de silice de précipitation.

La silice introduite peut avantageusement se présenter sous la forme d'agglomérats de taille moyenne inférieure à 50 µm, lesdits agglomérats étant constitués d'agrégats de taille moyenne inférieure à 0,1 µm.

Il peut s'agir par exemple de la silice précipitée T38AB commercialisée par Rhône-Poulenc se présentant sous forme d'agglomérats de taille inférieure à 50 µm. Ces agglomérats se divisent dans le mélange de phase liante et d'eau sous forme d'agrégats de taille inférieure à 0,1 µm. Ces agrégats formés de particules élémentaires de taille 15 nm et sont indivisibles dans le mélange phase liante/eau.

On peut utiliser également de la fumée de silice broyée ou de la silice pyrogénée.

La teneur en composé minéral du ciment selon l'invention est comprise, en général, entre 1 et 15 parties en poids pour 100 parties de la phase liante, de préférence entre 1 et 10 parties.

La quantité d'eau à introduire pour la préparation du ciment selon l'invention est telle que l'on obtienne une pâte plastique, homogène et malléable. Elle dépend de l'application ultérieure du ciment. En effet, si l'on désire faire des revêtements internes de tuyauterie, la composition est en général plus cohésive qu'un ciment destiné à constituer un revêtement de sol, ou la préparation de dalles ou de panneaux.

En général, la teneur en eau est inférieure à 50 % en poids, de préférence comprise entre 30 et 40 %, par rapport au poids de phase liante.

Le mélange de la phase liante et de l'eau peut être effectué selon toute méthode appropriée. Ainsi, on peut procéder en apportant tous les éléments constitutifs du ciment, et l'eau, simultanément ou séparément. Selon cette dernière possibilité, on prépare en général une composition comprenant la phase liante, les granulats, le cas échéant un agent retardant et tout ou partie des additifs éventuels en général solides, précédemment cités, notamment le polymère lorsqu'il se présente sous forme de poudre. On mélange ensuite ladite composition avec de l'eau, celle-ci comprenant, si tel est le cas, les éléments non introduits dans l'étape antérieure de préparation de la composition, comme les additifs liquides, et notamment le polymère, s'il est sous forme de latex, ou l'aminoalkylsilane.

Il est à noter que l'on peut aussi envisager de mettre en oeuvre des mélanges plus ou moins complets des éléments constitutifs du ciment, depuis le mélange des éléments au moment de l'application jusqu'à l'utilisation de mélanges pour lesquels, seule l'eau étant à apporter.

L'essentiel du procédé est qu'il soit mis en oeuvre de façon à obtenir une répartition de tous les éléments constitutifs la plus homogène possible dans la masse du ciment.

Le mélange des éléments constitutifs se fait par tout moyen connu et de préférence dans des conditions cisaillantes, en utilisant par exemple un malaxeur.

L'opération de mélange est avantageusement effectuée à une température voisine de la température ambiante.

L'invention concerne également le procédé de préparation du ciment phosphomagnésien tel que décrit précédemment, dans lequel on met en contact les composés du phosphore et du magnésium, au moins un polymère sous forme de particules insoluble dans l'eau, éventuellement au moins un aminoalkylsilane, et de l'eau.

Les exemples suivants illustrent l'invention sans toutefois en limiter la portée.

### EXEMPLES

### Méthodes de contrôle des caractéristiques du ciment

### Mesure de l'ouvrabilité (ou slump)

L'ouvrabilité est mesurée à l'aide d'une table à secousse sur mortier normalisé, selon la norme NFP 15403. Le mortier est introduit dans un moule tronconique puis démoulé et secoué à l'aide de la table à secousse (15 coups en 15 s). L'ouvrabilité est le rapport du diamètre du moule tronconique sur celui du mortier après effondrement. Il s'exprime en pourcentage.

### Mesure des propriétés mécaniques en compression et flexion

On réalise des éprouvettes prismatiques (4X4X16 cm³) en coulant le mortier ou le coulis dans des moules standards en acier doux à l'aide d'une table à chocs (60 coups). Ces éprouvettes sont démoulées 24 heures après le temps de prise et séchées à 23 °C sous 50 % d'humidité relative. Les propriétés mécaniques sont testées sur ces éprouvettes.

Les essais sont réalisés en flexion en trois points (NFP 18407) sur trois éprouvettes et en compression (NFP 15451) sur six demi-éprouvettes à l'aide d'une machine d'essai hydraulique (200 kN).

### Mesure du module élastique

On réalise une éprouvette prismatique (4X4X16 cm³) en coulant le mortier ou le coulis dans des moules standards en acier doux à l'aide d'une table à chocs (60 coups). Le module élastique est obtenu par vibration de l'éprouvette sur deux appuis et mesure de la fréquence fondamentale à l'aide d'un appareil Grindosonic.

### Mesure de la densité

La densité est mesurée sur le ciment frais, après malaxage, par pesée dans un volume déterminé.

### Mesure de l'air occlus

L'air occlus est mesuré sur le mortier frais à l'aide d'un aéromètre de capacité 1 litre selon la norme DIN 1164.

### Mesure des prooriétés d'hydrofugation

On réalise une éprouvette prismatique (4X4X16 cm³). Elle est démoulée 24 heures après, et stabilisée 6 jours dans une salle conditionnée (23 °C, 50 % d'humidité). Elle est alors pesée.

L'éprouvette est ensuite placée verticalement dans un récipient contenant une quantité d'eau telle qu'une faible partie des éprouvettes soit immergée (hauteur immergée : 2 à 3 mm).

L'hydrofugation est évaluée par l'absorption capillaire, laquelle est suivie par la prise de masse (Δm) de l'éprouvette.

### Exemple comparatif 1 : mortier phosphomagnésien standard

On prépare un mortier phosphomagnésien à partir des constituants suivants :
- 25 % de phase liante constituée de :
   . 50 % en poids de phosphate monoammonique,
   . 50 % en poids d'oxyde de magnésium,
- 75 % de sable normalisé CEN 31 196-1 d'origine naturelle (LEUCATE) constitué d'un mélange d'éléments fins (0/1 mm), moyen (1/1,6 mm) et gros (1/6, 2 mm).

On prépare un mortier de rapport massique eau/phase liante égal à 0,38 par mélange des matériaux définis ci-dessus avec de l'eau. Le mélange est réalisé à l'aide d'un malaxeur à mortier PERRIER, suivant le cycle de malaxage normalisé selon la Norme AFNOR NF P15-411 de la manière suivante. Les matériaux à rétat sec sont malaxés pendant 30 s à petite vitesse (60 tr/min), puis on y ajoute l'eau dans la proportion souhaitée, et on continue à malaxer pendant 2 min. On arrête le malaxeur et on homogénéise manuellement. Enfin, on remet en marche le malaxeur à grande vitesse pendant 2 min (120 tr/min).

On mesure l'ouvrabilité, la densité de ces mortiers frais ainsi que les propriétés mécaniques obtenues. Les résultats sont les suivants :

| | |
|---|---|
| ouvrabilité | 40 % |
| densité | 2,02 |
| air occlus | 14 % |

Les propriété mécaniques sont rassemblées dans le tableau 1 :

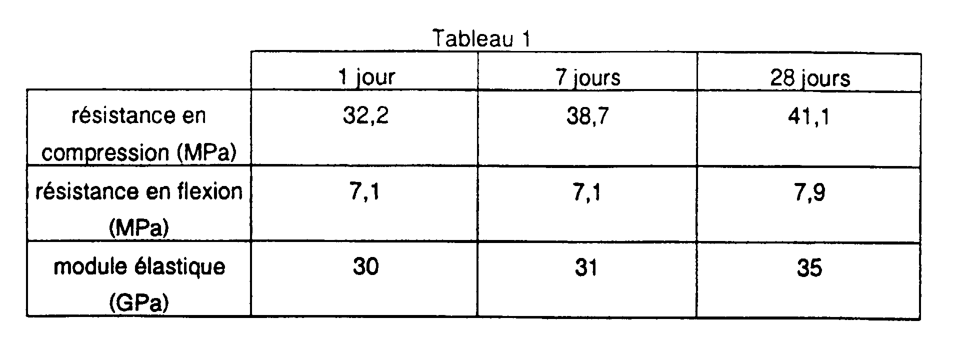

L'absorption capillaire en fonction du temps évolue de la manière suivante :

**Tableau 2**

| Durée | Absorption Δm (g) |
|---|---|
| 1 heure | 0,75 |
| 2 heures | 1,05 |
| 24 heures | 1,9 |

### Exemple 2 - Mortier phosphomagnésien comprenant un latex

On prépare un mortier en suivant la mise en oeuvre de l'exemple 1 si ce n'est qu'on introduit avec les matières sèches un polymère en une teneur de 20 % en poids, exprimé en sec, par rapport à la phase liante.

Plusieurs poudres de polymères redispersables dans l'eau sont testées :
1 - une poudre de copolymère d'acétate de vinyle et de versatate de vinyle,
2 - une poudre de copolymère styrène/butadiène et d'un acide carboxylique

Les caractéristiques des mortiers obtenus sont rassemblées dans le tableau 3.

**Tableau 3**

| Polymère | 1 | 2 |
|---|---|---|
| Ouvrabilité (%) | | 30 |
| Densité | 1,98 | 1,62 |
| Air occlus (%) | | 21 |

| Résistance en compression (MPa) | | |
|---|---|---|
| 1 jour | | 15,3 |
| 7 jours | 36,7 | 23,3 |
| 28 jours | | 25 |

| Résistance en flexion (MPa) | | |
|---|---|---|
| 1 jour | | 4,6 |
| 7 jours | 7,5 | 7,1 |
| 28 jours | | 7,8 |

| Module élastique (GPa) | | |
|---|---|---|
| 1 jour | 22,5 | 17,3 |
| 7 jours | 24 | 20 |

On observe que la présence des poudres de polymères dans le mortier permet d'abaisser le module élastique par rapport au mortier standard de l'exemple 1. Cependant, on observe également un fort entraînement d'air dans le mortier lors du mélange ce qui conduit à un produit final de faible densité, poreux.

Les propriétés d'hydrofugation ont été contrôlées sur un mortier réalisé en suivant la mise en oeuvre de l'exemple 1 si ce n'est qu'on introduit avec les matières sèches une poudre de polymère en une teneur de 2 % en poids, exprimé en sec, par rapport à la phase liante.

La poudre de polymère testée est la poudre de copolymère styrène/butadiène et d'acide carboxylique (2).

Les mesures d'adsorption capillaire sont rassemblées dans le tableau 4.

**Tableau 4**

| Durée | Absorption Δm (g) |
|---|---|
| 1 heure | 0,1 |
| 2 heures | 0,175 |
| 24 heures | 0,19 |

On observe que l'ajout d'une faible quantité du polymère 2 a permis de diminuer fortement l'adsorption capillaire.

### Exemple 3 - Mortier phosphomagnésien comprenant un latex et un aminoalkylsilane

On prépare un mortier en suivant la mise en oeuvre de l'exemple 1 si ce n'est qu'on introduit avec les matières sèches la poudre de polymère 2 défini dans l'exemple 2 en une teneur de 20 % en poids, exprimé en sec, par rapport à la phase liante, et le γ aminopropyltriéthoxysilane dans une teneur de 1 % en poids par rapport à la phase liante.

On mesure l'ouvrabilité, la densité du mortier ainsi que les propriétés mécaniques obtenues. Les résultats sont les suivants :

| | |
|---|---|
| ouvrabilité | 50 % |
| densité | 1,80 |
| air occlus | 11 % |

Les propriété mécaniques sont rassemblées dans le tableau 5 :

**Tableau 5**

| | 1 jour | 7 jours | 28 jours |
|---|---|---|---|
| résistance en compression (MPa) | 13,5 | 29 | 31 |
| résistance en flexion (MPa) | 4,5 | 8 | 8,5 |
| module élastique (GPa) | 17,5 | 21 | 22 |

La présence de l'aminosilane permet de conserver au mortier une densité élevée et des performances mécaniques correctes.

Les propriétés d'hydrofugation ont été contrôlées sur un mortier réalisé en suivant la mise en oeuvre de l'exemple 1 si ce n'est qu'on introduit avec les matières sèches une poudre de polymère en une teneur de 2 % en poids, exprimé en sec, par rapport à la phase liante, et le γ aminopropyltriéthoxysilane dans une teneur de 1 % en poids par rapport à la phase liante.

La poudre de polymère est la poudre de copolymère styrène/butadiène et d'acide carboxylique (2).

Les mesures d'adsorption capillaire sont rassemblées dans le tableau 6.

**Tableau 6**

| Durée | Absorption Δm (g) |
|---|---|
| 1 heure | 0,075 |
| 2 heures | 0,125 |
| 24 heures | 0,15 |

On observe que l'action combinée d'une faible quantité du polymère 2 et de l'aminoalkylsilane a permis d'encore diminuer l'adsorption capillaire.

## Revendications

1. Ciment phosphomagnésien caractérisé en ce qu'il est susceptible d'être obtenu par mise en contact d'une phase liante à base d'au moins un composé du phosphore et d'au moins un composé du magnésium, avec au moins un polymère sous forme de particules insoluble dans l'eau, et de l'eau.

2. Ciment selon la revendication 1, caractérisé en ce que le polymère sous forme de particules insoluble dans l'eau est issu de la polymérisation d'au moins un monomère à insaturation éthylénique et au moins un monomère choisi parmi les monomères à fonction carboxylique et l'acrylamide ou le méthacrylamide.

3. Ciment selon la revendication 2, caractérisé en ce que le monomère à insaturation éthylénique est choisi parmi : le styrène, le butadiène, les esters acryliques ou méthacryliques d'alkyle en C₁-C₁₂ et leurs acides correspondants ou les esters vinyliques.

4. Ciment selon l'une des revendications 2 ou 3, caractérisé en ce que le monomère à fonction carboxylique est choisi parmi les acides carboxyliques à insaturation éthylénique.

5. Ciment selon la revendication précédente, caractérisé en ce que le monomère à fontion carboxylique est choisi parmi l'acide acrylique, l'acide itaconique, l'acide fumarique, l'acide crotonique, l'acide maléique, l'anhydride maléique, l'acide mésaconique, l'acide glutaconique ou leurs mélanges.

6. Ciment selon l'une quelconque des revendications 2 à 5, caractérisé en ce que le polymère sous forme de particules insoluble dans l'eau est préparé à partir d'un mélange de monomères comportant 99,9 à 92 % en poids d'au moins un monomère à insaturation éthylénique et 0,1 à 8 % en poids d'au moins un monomère à fonction carboxylique.

7. Ciment selon la revendication 1, caractérisé en ce que le polymère sous forme de particules insoluble dans l'eau est issu de la polymérisation d'au moins un monomère choisi parmi les esters vinyliques d'acides carboxyliques.

8. Ciment selon la revendication 7, caractérisé en ce que le polymère sous forme de particules insoluble dans l'eau est issu de la copolymérisation du versatate de vinyle et de l'acétate de vinyle.

9. Ciment selon l'une quelconque des revendications précédentes, caractérisé en ce que le polymère sous forme de particules insoluble dans l'eau se présente sous forme d'une dispersion dans l'eau de particules de polymère.

10. Ciment selon l'une quelconque des revendications 1 à 8, caractérisé en ce que le polymère sous forme de particules insoluble dans l'eau se présente sous forme d'une poudre redispersable dans l'eau.

11. Ciment selon l'une quelconque des revendications précédentes, caractérisé en ce que la teneur en polymère sous forme de particules insoluble dans l'eau est de 0,5 à 30 parties en poids pour 100 parties en poids de phase liante.

12. Ciment selon l'une quelconque des revendicaitons précédentes, caractérisé en ce qu'il est susceptible d'être obtenu par mise en contact de la phase liante avec au moins un polymère sous forme de particules insoluble dans l'eau et au moins un aminoalkylsilane, et de l'eau.

13. Ciment selon la revendication précédente, caractérisé en ce que l'aminoalkylsilane est un aminoalkyl(alkoxysilane).

14. Ciment selon l'une quelconque des revendications 12 ou 13, caractérisé en ce que l'aminoalkylsilane est choisi parmi ceux de formule : R¹R²N - (CH₂)ₙ - Si(OCₘH₂ₘ₊₁)₃ avec :
n > 1
m > 1
R¹, R² groupements alkyle, aryle, alkylaryle, alkylène, aminoalkyl.

15. Ciment selon l'une quelconque des revendications 12 à 14, caractérisé en ce que l'aminosilane est choisi parmi le groupe comprenant : le gamma-aminopropyltriéthoxysilane, le 4-aminobutyltriéthoxysilane, le (aminoéthylaminométhyl)phénéthyltriméthoxysilane, le N-(2-aminoéthyl-3-amino propyl)triméthoxysilane, le w-aminoundécyltriméthoxysilane.

16. Ciment selon l'une quelconque des revendications 12 à 15, caractérisé en ce que la teneur en aminoalkylsilane est de 0,05 à 2 partie en poids pour 100 parties en poids de phase liante.

17. Ciment selon l'une quelconque des revendications précédentes, caractérisé en ce qu'il comprend un démoussant.

18. Ciment selon l'une quelconque des revendications précédentes, caractérisé en ce qu'il comprend des granulats.

19. Ciment selon la revendication précédente, caractérisé en ce que la teneur en granulats est d'au plus 1000 parties en poids, rapporté à 100 parties en poids de phase liante.

20. Ciment selon l'une quelconque des revendications précédentes, caractérisé en ce que la teneur en eau est inférieure à 50 % en poids par rapport au poids de la phase liante.

21. Ciment selon la revendication précédente, caractérisé en ce qu'il est susceptible d'être obtenu par mélange de la phase liante, du polymère, éventuellement de l'aminosilane, de l'eau, et d'au moins un composé minéral introduit sous forme :
- soit de particules (1 ) de taille inférieure à 0,1 µm,
- soit d'agrégats (2) de taille inférieure à 0,1 µm,
- soit d'agglomérats (3) susceptibles de se désagglomérer au moins en partie, lors du mélange de ladite phase liante et de l'eau, en particules de taille inférieure à 0,1 µm ou en agrégats de taille inférieure à 0,1 µm.

22. Ciment phosphomagnésien selon la revendication précédente, caractérisé en ce que le composé minéral est la silice.

23. Procédé de préparation du ciment phosphomagnésien selon l'une quelconque des revendications précédentes, caractérisé en ce que l'on mélange les composés du phosphore et du magnésium, au moins un polymère sous forme de particules insoluble dans l'eau, éventuellement au moins un aminoalkylsilane, et de l'eau.

24. Procédé selon la revendication 23, caractérisé en ce qu'on mélange les composés du phosphore et du magnésium, puis on ajoute au moins un polymère sous forme de particules insoluble dans l'eau, puis on ajoute l'eau et éventuellement au moins un aminoalkylsilane.

## Claims

1. A magnesium phosphate cement, characterized in that it can be obtained by bringing a binder phase based on at least one phosphorous compound and at least one magnesium compound into contact with at least one polymer in the form of particles which are insoluble in water, and with water.

2. A cement according to claim 1, characterized in that the polymer in the form of particles which are insoluble in water originates from polymerisation of at least one ethylenically unsaturated monomer and at least one monomer selected from monomers with a carboxyl function and acrylamide or methacrylamide.

3. A cement according to claim 2, characterized in that the ethylenically unsaturated monomer is selected from: styrene, butadiene, C₁-C₁₂ alkyl acrylic or methacrylic esters and their corresponding acids or vinyl esters.

4. A cement according to claim 2 or claim 3, characterized in that the monomer with a carboxyl function is selected from ethylenically unsaturated carboxylic acids.

5. A cement according to the preceding claim, characterized in that the monomer with a carboxyl function is selected from acrylic acid, itaconic acid, fumaric acid, crotonic acid, maleic acid, maleic anhydride, mesaconic acid, glutaconic acid or mixtures thereof.

6. A cement according to any one of claims 2 to 5, characterized in that the polymer in the form of particles which are insoluble in water is prepared from a mixture of monomers comprising 99.9% to 92% by weight of at least one ethylenically unsaturated monomer and 0.1% to 8% by weight of at least one monomer with a carboxyl function.

7. A cement according to claim 1, characterized in that the polymer in the form of particles which are insoluble in water originates from polymerising at least one monomer selected from vinyl esters of carboxylic acids.

8. A cement according to claim 7, characterized in that the polymer in the form of particles which are insoluble in water originates from co-polymerising vinyl versatate and vinyl acetate.

9. A cement according to any one of the preceding claims, characterized in that the polymer in the form of particles which are insoluble in water is in the form of a dispersion of polymer particles in water.

10. A cement according to any one of claims 1 to 8, characterized in that the polymer in the form of particles which are insoluble in water is in the form of a powder which can he re-dispersed in water.

11. A cement according to any one of the preceding claims, characterized in that the amount of polymer in the form of particles which are insoluble in water is 0.5 to 30 parts by weight per 100 parts by weight of binder phase.

12. A cement according to any one of the preceding claims, characterized in that it can be obtained by bringing binder phase into contact with at least one polymer in the form of particles which are insoluble in water and at least one aminoalkylsilane, and water.

13. A cement according to the preceding claim, characterized in that the aminoalkylsilane is an aminoalkyl(alkoxysilane).

14. A cement according to claim 12 or claim 13, characterized in that the aminoalkylsilane is selected from those with formula: R¹R²N-(CH₂)ₙ-Si(OCₘH₂ₘ₊₁)₃ where:
n > 1;
m > 1;
R¹, R² are alkyl, aryl, alkylaryl, alkylene or aminoalkyl groups.

15. A cement according to any one of claims 12 to 14, characterized in that the aminosilane is selected from the group formed by: gamma-aminopropyltriethoxysilane, 4-aminobutyltriethoxysilane, (aminoethylaminomethyl)phenethyltrimethoxysi lane, N-(2-aminoethyl-3-aminopropyl)trimethoxysilane and ω-aminoundccyltrimcthoxysilane.

16. A cement according to any one of claims 12 to 15, characterized in that the amount of aminoalkylsilane is 0.05 to 2 parts by weight per 100 parts by weight of binder phase.

17. A cement according to any one of the preceding claims, characterized in that it comprises a defoaming agent.

18. A cement according to any one of the preceding claims, characterized in that it comprises aggregate.

19. A cement according to the preceding claim, characterized in that the amount of aggregate is at most 1000 parts by weight per 100 parts by weight of binder phase.

20. A cement according to any one of the preceding claims, characterized in that the water content is less than 50% by weight with respect to the weight of the binder phase.

21. A cement according to the preceding claim, characterized in that it can be obtained by mixing the binder phase, polymer, optional aminosilane, water and at least one mineral compound introduced in the form of:
• either particles (1) less than 0.1 µm in size;
• or aggregates (2) less than 0.1 µm in size;
• or agglomerates (3) which can at least partially de-agglomerate on mixing said binder phase and water to particles less than 0.1 µm in size or to aggregates less then 0.1 µm in size.

22. A magnesium phosphate cement according to the preceding claim, characterized in that the mineral compound is silica.

23. A process for preparing a magnesium phosphate cement according to any one of the preceding claims, characterized in that the phosphorous and magnesium compounds, at least one polymer in the form of particles which are insoluble in water, optional at least one aminoalkylsilane and water are mixed.

24. A process according to claim 23, characterized in that the phosphorous and magnesium compounds are mixed then at least one polymer in the form of particles which are insoluble in water is added, then water is added and optionally at least one aminoalkylsilane.

## Patentansprüche

1. Phosphomagnesiumzement, dadurch gekennzeichnet, daß er geeignet ist, durch In-Kontakt-Bringen einer Bindemittel-Phase auf der Basis von mindestens einer Phosphorverbindung und mindestens einer Magnesiumverbindung mit mindestens einem Polymer in Form von in Wasser unlöslichen Teilchen und Wasser erhalten zu werden.

2. Zement nach Anspruch 1, dadurch gekennzeichnet, daß das Polymer in Form von in Wasser unlöslichen Teilchen aus der Polymerisation von mindestens einem Monomer mit ethylenischer Unsättigung und mindestens einem Monomer stammt, das unter den Monomeren mit Carboxylfunktion und Acrylamid oder Methacrylamid ausgewählt wird.

3. Zement nach Anspruch 2, dadurch gekennzeichnet, daß das Monomer mit ethylenischer Unsättigung unter Styrol, Butadien, den Acrylestern oder Methacrylestern von Alkyl mit 1 bis 12 Kohlenstoffatomen und ihren entsprechenden Säuren oder den Vinylestern ausgewählt wird.

4. Zement nach einem der Ansprüche 2 oder 3, dadurch gekennzeichnet, daß das Monomer mit Carboxylfunktion unter den Carbonsäuren mic ethylenischer Unsättigung ausgewählt wird.

5. Zement nach vorstehendem Anspruch, dadurch gekennzeichnet, daß das Monomer mit Carboxylfunktion unter Acrylsäure, Itaconsäure, Fumarsäure, Crotonsäure, Maleinsäure, Maleinsäureanhydrid, Mesaconsäure, Glutaconsäure oder ihren Mischungen ausgewählt wird.

6. Zement nach irgendeinem der Ansprüche 2 bis 5, dadurch gekennzeichnet, daß das Polymer in Form von in Wasser unlöslichen Teilchen ausgehend von einer Mischung von Monomeren hergestellt wird, die 99,9 Gew.-% bis 92 Gew.-% von mindestens einem Monomer mit ethylenischer Unsättigung und 0,1 Gew.-% bis 8 Gew.-% von mindestens einem Monomer mit Carboxylfunktion umfaßt.

7. Zement nach Anspruch 1, dadurch gekennzeichnet, daß das Polymer in Form von in Wasser unlöslichen Teilchen aus der Polymerisation von mindestens einem Monomer stammt, das unter den Vinylestern von Carbonsäuren ausgewählt wird.

8. Zement nach Anspruch 7, dadurch gekennzeichnet, daß das Polymer in Form von in Wasser unlöslichen Teilchen aus der Copolymerisation von Vinylversatat und Vinylacetat stammt.

9. Zement nach irgendeinem der vorstehenden Ansprüche, dadurch gekennzeichnet, daß das Polymer in Form von in Wasser unlöslichen Teilchen in Form einer Dispersion der Polymerteilchen in Wasser vorliegt.

10. Zement nach irgendeinem der Ansprüche 1 bis 8, dadurch gekennzeichnet, daß das Polymer in Form von in Wasser unlöslichen Teilchen in Form eines in Wasser redispergierbaren Pulvers vorliegt.

11. Zement nach irgendeinem der vorstehenden Ansprüche, dadurch gekennzeichnet, daß der Gehalt an dem Polymer in Form von in Wasser unlöslichen Teilchen 0,5 Gewichtsteile bis 30 Gewichtsteile pro 100 Gewichtsteile Bindemittel-Phase beträgt.

12. Zement nach irgendeinem der vorstehenden Ansprüche, dadurch gekennzeichnet, daß er geeignet ist, durch In-Kontakt-Bringen der Bindemittel-Phase mit mindestens einem Polymer in Form von in Wasser unlöslichen Teilchen und mindestens einem Aminoalkylsilan und Wasser erhalten zu werden.

13. Zement nach irgendeinem der vorstehenden Ansprüche, dadurch gekennzeichnet, daß das Aminoalkylsilan ein Aminoalkyl(alkoxysilan) ist.

14. Zement nach irgendeinem der Ansprüche 12 oder 13, dadurch gekennzeichnet, daß das Aminoalkylsilan unter denen der Formel R¹R²N- (CH₂)ₙ-Si(OCₘH₂ₘ₊₁)₃ ausgewählt wird, mit:
n > 1,
m > 1,
R¹, R² Gruppen Alkyl, Aryl, Alkylaryl, Alkylen, Aminoalkyl.

15. Zement nach irgendeinem der Ansprüche 12 bis 14, dadurch gekennzeichnet, daß das Aminoalkylsilan aus der Gruppe gewählt wird, die umfaßt: γ-Aminopropyl-triethoxysilan, 4-Aminobutyltriethoxysilan, (Aminoethylaminomethyl) -phenethyl-trimethoxysilan, N-(2-Aminoethyl-3-aminopropyl)-trimethoxysilan, ω-Amino-undecyl-trimethoxysilan.

16. Zement nach irgendeinem der Ansprüche 12 bis 15, dadurch gekennzeichnet, daß der Gehalt an Aminoalkylsilan 0,05 Gewichtsteile bis 2 Gewichtsteile pro 100 Gewichtsteile Bindemittel-Phase beträgt.

17. Zement nach irgendeinem der vorstehenden Ansprüche, dadurch gekennzeichnet, daß er ein Entschäumungsmittel umfaßt.

18. Zement nach irgendeinem der vorstehenden Ansprüche, dadurch gekennzeichnet, daß er Granulate umfaßt.

19. Zement nach vorstehendem Anspruch, dadurch gekennzeichnet, daß der Gehalt an Granulaten höchstens 1000 Gewichtsteile beträgt, bezogen auf 100 Gewichtsteile Bindemittel-Phase.

20. Zement nach irgendeinem der vorstehenden Ansprüche, dadurch gekennzeichnet, daß der Gehalt an Wasser unter 50 Gew.-% liegt, bezogen auf das Gewicht der Bindemittel-Phase.

21. Zement nach vorstehendem Anspruch, dadurch gekennzeichnet, daß er geeignet ist, durch Mischen der Bindemittel-Phase, des Polymers, gegebenenfalls des Aminosilans, von Wasser und von mindestens einer mineralischen Verbindung erhalten zu werden, eingetragen in Form von
- entweder Teilchen (1) mit einer Größe von unter 0,1 µm,
- oder Aggregaten (2) mit einer Größe von unter 0,1 µm,
- oder Agglomeraten (3), die fähig sind, sich mindestens teilweise beim Mischen der genannten Bindemittel-Phase und Wasser in Teilchen mit einer Größe von unter 0,1 µm oder in Aggregate mit einer Größe von unter 0,1 µm zu deagglomerieren.

22. Phosphomagnesiumzement nach vorstehendem Anspruch, dadurch gekennzeichnet, daß die mineralische Verbindung Siliciumdioxid ist.

23. Verfahren zur Herstellung von Phosphomagnesiumzement nach irgendeinem der vorstehenden Ansprüche, dadurch gekennzeichnet, daß man die Verbindungen von Phosphor und Magnesium, mindestens ein Polymer in Form von in Wasser unlöslichen Teilchen, gegebenenfalls mindestens ein Aminoalkylsilan und Wasser vermischt.

24. Verfahren nach Anspruch 23, dadurch gekennzeichnet, daß man die Verbindungen von Phosphor und Magnesium vermischt, anschließend mindestens ein Polymer in Form von in Wasser unlöslichen Teilchen hinzugibt und danach das Wasser und gegebenenfalls mindestens ein Aminoalkylsilan zusetzt.
